# DEMANDE DE BREVET EUROPEEN

(11) **EP 4 001 221 A1**
(43) Date de publication de la demande: **25.05.2022**
(21) Numéro de dépôt: 21208560.9
(22) Date de dépôt: 16.11.2021
(51) Int. Cl.: C02F 1/467

(54) **DISPOSITIF DE PRODUCTION DE CHLORE PAR ELECTROCHLORATION**

(30) Priorité: 17.11.2020 FR 2011758
(71) Demandeur: Vergnet SA, 45140 Ormes (FR)
(72) Inventeur: DURAND, Mathieu, 45000 ORLEANS (FR); BURLOT, Jean-François, 37390 METTRAY (FR); BRETONNEAU, William, 41500 SERIS (FR)
(74) Mandataire: Santarelli

(57) **Abrégé**

L'invention porte sur un dispositif de production de chlore par électrochloration d'une solution contenant des chlorures, le dispositif comportant une cuve (1) formant un volume intérieur (2) destiné à recevoir ladite solution et un électrolyseur (7) installé dans la cuve (1). Le dispositif comporte une enceinte (6) dans laquelle est disposée ou formée la cuve (1), ladite enceinte (6) étant configurée de sorte à isoler thermiquement le volume intérieur (2) de la cuve (1) vis-à-vis de l'atmosphère ambiante (3). Le dispositif comporte un dispositif de régulation thermique comportant un dispositif thermodynamique (9) adapté à refroidir la solution présente dans la cuve (1). Le dispositif thermodynamique (9) comporte un module Peltier et est installé au fond de la cuve (1). L'association d'une cuve isolée thermiquement et d'un dispositif de régulation thermique permet un pilotage de la température de la solution électrolysée, ce qui permet l'obtention dans un temps acceptable d'une solution de chlore actif dans des conditions climatiques complexes.

## Description

La présente invention concerne un dispositif destiné à produire du chlore actif (hypochlorite de sodium) par électrochloration. L'électrochloration consiste ainsi à utiliser des électrodes plongées dans une solution salée pour permettre la production de chlore. En particulier, l'électrochloration est une technique qui permet, généralement, la production in situ d'une solution enrichie en hypochlorite de sodium à partir d'une solution contenant du chlorure de sodium (sel de cuisine également plus simplement désigné « sel »).

Ce procédé est utilisé pour la production d'une solution de désinfection pour l'eau. Les applications connues de ce procédé sont nombreuses. Elles peuvent être industrielles, comme par exemple le traitement de l'eau ou la lutte contre la prolifération d'algues ou de mollusques. Une autre application de ce procédé concerne la potabilisation de l'eau. Il s'agit d'une application importante lorsque l'eau potable n'est pas ou plus accessible aux populations, par exemple dans une zone ayant connu une catastrophe naturelle, la sécheresse, en zone de guerre, etc.

La présente invention concerne ainsi plus particulièrement un dispositif de potabilisation d'eau.

Un des problèmes que pose le procédé d'électrochloration, est qu'il entraîne aussi la production de chlorates, produit nocif, irritant, et dangereux. La production de chlorates se produit de façon significative à partir d'une température de 40°C, et augmente drastiquement avec l'augmentation de la température de la solution électrolysée.

Or, l'eau potable ne doit pas contenir plus de 0,2 à 0,7 mg/L de chlorates, selon certains organismes mondiaux de référence, notamment l'OMS.

Une autre difficulté soulevée par l'art antérieur est la nécessité de contrôler les conditions de production de chlore. Il est ainsi important de réaliser un pilotage précis de la réaction. Afin d'offrir une solution à ces problématiques, le document FR2976573 divulgue un procédé pour la production de chlore par électrochloration à l'aide d'électrodes plongées dans une solution contenant du sel (chlorure de sodium, également appelé « sel de cuisine »). FR2976573 envisage notamment l'emploi d'eau de mer. Selon l'enseignement de ce document, les électrodes sont alimentées par des moyens de production d'électricité photovoltaïques au fil de l'ensoleillement, et on contrôle le processus de production de chlore, et en particulier l'alimentation ou non des électrodes et le niveau de tension appliqué, à l'aide de moyens de contrôle alimentés en électricité par lesdits moyens de production d'électricité.

Si le procédé et le dispositif proposés dans ce document permettent la production de chlore par électrochloration afin de traiter de l'eau en réduisant autant que possible la production de chlorates, ce procédé et ce dispositif présentent néanmoins certaines limites. Tout d'abord, comme l'électrochloration est stoppée ou ralentie dès que la température de la solution qui est électrolysée atteint une température trop importante, la production de chlore peut être alentie, en particulier lorsque la température ambiante est élevée. Par ailleurs, la durée de la réaction d'électrochloration pour atteindre une concentration en chlore actif visée est très dépendante de la température de la solution électrolysée. A trop faible température, la réaction est lente ou inexistante. Ainsi, les dispositifs connus d'électrochloration ne fonctionnent pas, ou fonctionnement mal, lorsque la température ambiante est basse, notamment négative. En outre, les dispositifs actuels de potabilisation peuvent se révéler complexes à mettre en œuvre (à transporter, installer, utiliser).

Le document GB2202551 présente un dispositif de préparation d'hypochlorite de sodium dans une cuve qui est isolée thermiquement par un matériau isolant. La cuve est entourée d'un tube réfrigérant, lié à un compresseur et un condenseur. L'objectif de ce document est d'augmenter fortement la concentration en hypochlorite (typiquement jusque 40g/L en 12 heures) dans la solution formée en contrôlant la température à l'aide d'un puissant moyen de réfrigération.

La présente invention vise à proposer un dispositif d'électrochloration qui résout au moins l'une des problématiques ci-dessus exposées.

Ainsi, la présente invention porte sur un dispositif de production de chlore par électrochloration d'une solution contenant des chlorures. Le dispositif comporte une cuve formant un volume intérieur destinée à recevoir ladite solution et un électrolyseur installé dans la cuve. Le dispositif comporte une enceinte dans laquelle est disposée ou formée la cuve, ladite enceinte étant configurée de sorte à isoler thermiquement le volume intérieur de la cuve vis-à-vis de l'atmosphère ambiante extérieure au dispositif. Le dispositif comporte en outre un dispositif de régulation thermique comportant un dispositif thermodynamique adapté à refroidir la solution présente dans la cuve. Plus particulièrement, le dispositif thermodynamique comporte un module Peltier. Le dispositif thermodynamique est installé au niveau d'un fond de la cuve du dispositif de production de chlore par électrochloration.

En proposant une cuve isolée thermiquement, le dispositif va ainsi à rencontre de la conception des dispositifs d'électrochloration comparables connus.

En effet, alors que l'électrolyse induit de l'énergie thermique dans la solution électrolysée, les dispositifs d'électrochloration connus comportent une cuve qui n'a pas de propriété thermique particulière, ou qui est la plus thermiquement conductrice possible pour favoriser le refroidissement de la solution au travers des parois de la cuve.

En utilisant une cuve dont le volume intérieur est isolé thermiquement de l'atmosphère extérieure et un dispositif de régulation thermique, le présent dispositif permet un contrôle et un pilotage fin et permanent de la température de la solution électrolysée.

Cela procure de nombreux avantages. Tout d'abord, il est possible de faire atteindre à la solution une température optimale pour l'électrochloration puis de la maintenir à cette température si la température extérieure le permet, ou, a minima de tendre à maintenir à cette température à un niveau acceptable. Par « refroidir », il est donc entendu de manière générale le fait d'extraire de la chaleur de la solution présente dans la cuve. Le temps de réaction est ainsi réduit. En outre il est possible de mettre à profit la chaleur générée par le système au niveau des électrodes et par la réaction d'électrochloration pour permettre un fonctionnement du dispositif dans une atmosphère très froide, typiquement jusqu'à - 20 degrés Celsius.

Le contrôle de la température opéré permet ainsi principalement d'éviter de produire des substances néfastes pour la santé et d'optimiser le temps de production, comparativement aux systèmes analogues connus, et non de favoriser une augmentation importante de la concentration en hypochlorite.

L'emploi d'un module Peltier est particulièrement avantageux. Il permet la génération de froid grâce à un courant électrique modéré. C'est un dispositif compact et fiable. Le fonctionnement d'un module Peltier et en outre très simple à piloter.

Le positionnement en fond de cuve du dispositif thermodynamique permet d'amplifier un flux généré par l'électrolyse dans la solution que contient la cuve, qui permet son brassage.

Dans le dispositif de production de chlore, la cuve peut comporter une colonne d'électrolyse comportant l'électrolyseur, ladite colonne d'électrolyse étant installée dans le volume intérieur et étant orientée de sorte à s'étendre sensiblement verticalement lorsque le dispositif est utilisé, la cuve étant configurée de sorte qu'une solution présente dans la cuve peut s'écouler dans ladite colonne d'électrolyse d'une extrémité à une autre de ladite colonne d'électrolyse.

Le dispositif peut aussi comporter une restriction de section adaptée à accélérer un flux de solution s'écoulant du bas de la colonne d'électrolyse vers le haut de celle-ci et à générer un effet Venturi dans ledit flux.

La configuration, et en particulier le rapport entre la hauteur et la surface de la section transversale de la colonne d'électrolyse favorise ainsi le flux ascendant de solution dans la colonne d'électrolyse grâce à la production de dihydrogène au niveau des électrodes de l'électrolyseur. Enfin la mise en œuvre d'une restriction de section provoquant un effet venturi accélère le flux de solution dans la colonne et favorise aussi le brassage et l'homogénéisation de la solution dans la cuve.

Le brassage de la solution permet aussi de favoriser la rencontre des espèces chimiques obtenues à l'anode et à la cathode, à savoir du dichlore Cl₂ et des ions OH⁻. Cette rencontre est nécessaire pour la production d'hypochlorite, qui résulte de la rencontre de Cl₂ et OH⁻. En l'absence d'une telle rencontre, il y aurait un risque de perte de dichlore Cl₂ gazeux, ce qui aurait deux conséquences néfastes :
- le dichlore est un gaz toxique
- le dichlore qui s'échapperait ne serait pas utilisé pour l'électrolyse, ce qui se traduirait par une baisse de rendement.

Le dispositif peut également comporter un dissipateur thermique, préférentiellement de type ventirad, qui est configuré pour dissiper de la chaleur extraite de la solution par le dispositif thermodynamique.

Un dissipateur thermique permet une évacuation efficace des calories prélevées dans la solution par le dispositif thermodynamique (typiquement par le module Peltier). Un dissipateur thermique de type ventirad se révèle particulièrement adapté en ce qu'il est simple efficace et ne nécessite qu'une alimentation électrique pour fonctionner.

L'enceinte du dispositif peut comporter une paroi extérieure et une paroi intérieure, ladite paroi intérieure formant un volume adapté à recevoir la cuve ou formant ladite cuve, la paroi intérieure et la paroi extérieure étant espacées l'une de l'autre de sorte à former une couche d'isolation entre elles.

La couche d'isolation peut par exemple comporter au moins l'un des éléments isolants thermiques suivants :
- de l'air, à pression atmosphérique ou réduite,
- un gaz isolant thermique,
- un matériau plastique expansé, tel que du polystyrène expansé,
- un isolant fibreux, par exemple de la laine, de la laine de verre ou de la laine de roche.

Une double paroi se révèle être une configuration particulièrement bien adaptée pour assurer l'isolation thermique du volume intérieur de la cuve. Cette isolation thermique peut employer divers matériaux isolants connus dont certains sont cités ci-dessus à titre d'exemple.

Le dispositif peut comporter une alimentation électrique d'au moins l'un des types suivants :
- un ensemble de panneaux photovoltaïques,
- une batterie,
- une alimentation adaptée à être branchée à un réseau de distribution électrique ou un groupe électrogène.

Le dispositif peut comporter des moyens électroniques adaptés à détecter automatiquement le type d'alimentation électrique.

Le dispositif est avantageusement configuré pour pouvoir être alimenté électriquement par chacune des alimentations électriques précitées. Dans certains modes de réalisation, il peut être raccordé à plusieurs de ces sources d'énergie électrique simultanément.

Le dispositif peut ainsi s'adapter aux sources d'électricité disponibles là où il est mis en oeuvre. L'alimentation solaire permet une totale autonomie du dispositif. Néanmoins, l'emploi d'une batterie comme source d'alimentation principale est aussi envisageable, par exemple dans les cas où les panneaux photovoltaïques ne sont pas disponibles et qu'on ne peut pas utiliser un réseau électrique ou un groupe électrogène. L'alimentation photovoltaïque peut également, dans certains modes de réalisation, être employée pour recharger une batterie pouvant prendre le relais de l'alimentation photovoltaïque lorsque l'ensoleillement n'est pas suffisant. Enfin, l'alimentation électrique par un réseau électrique de distribution, ou par un groupe électrogène, est aussi possible.

Un dispositif cumulant ces trois possibilités d'alimentation électrique peut s'adapter à de nombreuses situations d'emploi.

Le dispositif peut comporter un système d'assistance au positionnement des panneaux photovoltaïques pour maximiser l'énergie électrique, lorsque l'alimentation électrique comporte un ensemble de panneaux photovoltaïques.

Le dispositif peut également comporter un dispositif électronique de contrôle. Ce dispositif est adapté à piloter le fonctionnement de l'électrolyseur et du dispositif thermodynamique en fonction d'au moins un paramètre, afin de limiter le temps de production du chlore tout en limitant ou en empêchant la production de chlorates.

Ce ou ces paramètres comportent par exemple un ou plusieurs des paramètres suivants :
- la température courante de la solution, mesurée en un point de la cuve ;
- la concentration courante de la solution en sel ;
- la concentration courante de la solution en chlore actif ; et
- la tension électrique disponible au niveau de l'alimentation électrique.

Le contrôle des différents paramètres de la réaction d'électrochloration, notamment la température de la solution et sa concentration en sel (typiquement en chlorure de sodium) ou en chlore actif, et le pilotage des paramètres du dispositif permettant de jouer sur la réaction d'électrochloration (en particulier la puissance du dispositif thermodynamique et/ou la tension appliquée aux électrodes de l'électrolyseur), permettent de piloter la réaction d'électrochloration pour l'optimiser.

L'évaluation de la teneur en chlore (ou corollairement de la teneur en sel) dans la solution peut être réalisée sans mesure directe. En effet, en connaissant la concentration initiale en sel de la solution électrolysée, et en mesurant la charge électrique passée dans le dispositif au cours de son utilisation, la quantité chlore produite peut être évaluée.

Le volume intérieur de la cuve du dispositif peut être compris, à titre d'exemple, entre 1L et 10L. Il peut être par exemple de l'ordre de 5L.

Un dispositif ayant une telle contenance est facilement transportable. Il permet néanmoins de répondre aux besoins de production d'eau potable dans de nombreuses situations. La présente invention vise donc un système transportable, et non système industriel.

Le dispositif peut comporter une interface homme-machine comportant des indicateurs d'état, tel qu'une ou plusieurs diodes électroluminescentes, un buzzer, haut-parleur ou avertisseur sonore, un écran, et un ou plusieurs boutons de commande, et préférentiellement un unique bouton de commande.

Le dispositif objet de la présente invention est avantageusement très simple d'emploi. Un bouton unique pour activer (c'est-à-dire mettre en production), optionnellement désactiver, choisir le cas échéant un mode de fonctionnement, et réinitialiser le dispositif, peut ainsi être suffisant pour le commander efficacement.

D'autres particularités et avantages de l'invention apparaîtront encore dans la description ci-après.

Aux dessins annexés, donnés à titre d'exemples non limitatifs :
- la figure 1 représente, selon une vue schématique en trois dimensions, un dispositif conforme à un mode de réalisation de l'invention ;
- la figure 2 représente, selon une vue schématique en coupe, une partie du dispositif de la figure 1 ;
- la figure 3 représente, selon un logigramme, un exemple de procédé de commande pouvant être mis en œuvre dans un dispositif conforme à un mode de réalisation de l'invention ;
- la figure 4 représente, selon un schéma bloc de principe, le contrôle des systèmes électriques pouvant être mis en œuvre dans un mode de réalisation de l'invention ;
- la figure 5 représente, par deux graphiques temporels, un exemple de résultat pouvant être obtenu lorsque la température ambiante autour d'un dispositif conforme à un mode de réalisation de l'invention est très élevée ;
- la figure 6 représente, par deux graphiques temporels, un exemple de résultat pouvant être obtenu lorsque la température ambiante autour d'un dispositif conforme à un mode de réalisation de l'invention est très basse.

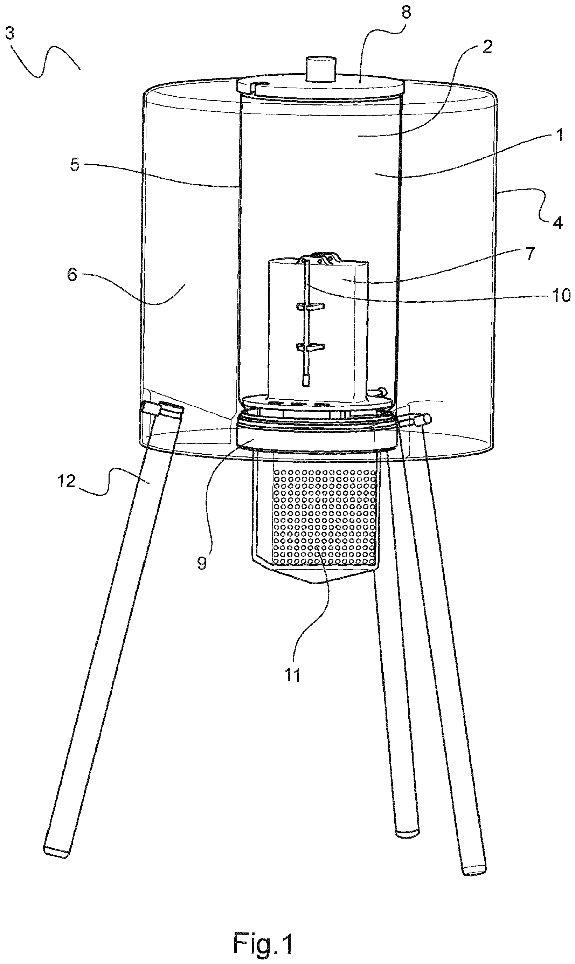

La figure 1 représente, selon une vue schématique en trois dimensions, un dispositif conforme à un mode de réalisation de l'invention.

Le dispositif d'électrochloration conforme à l'invention comporte une cuve 1 qui définit un volume intérieur 2. Pour des questions de résistance et de neutralité vis-à-vis de la solution qui y est électrolysée, la cuve 1 est formée d'un matériau résistant aux espèces chimiques en présence, ou la paroi intérieure de la cuve est recouverte d'un tel matériau.

La cuve 1 peut ainsi être réalisée en matériau plastique (y compris composite, par exemple à base de fibre de verre) ou en verre. Elle peut être métallique en étant si nécessaire recouverte, sur sa paroi intérieure, par un matériau résistant aux espèces chimiques en présence, par exemple un matériau plastique adapté.

Les parties de la cuve 1, et plus généralement du dispositif d'électrochloration, qui sont amenées à être en contact avec la solution électrolysée sont avantageusement réalisées en un matériau adapté au contact alimentaire. Notamment, l'emploi de matériaux peu susceptibles de relâcher des phtalates dans la solution est préféré.

La cuve 1 d'un dispositif électrochloration conforme à l'invention a la particularité d'être isolée thermiquement 2 vis-à-vis de l'atmosphère ambiante 3 qui règne autour du dispositif d'électrochloration. Par « isolé thermiquement » on entend réduire significativement les échanges thermiques entre le volume intérieur de la cuve et l'atmosphère ambiante 3 extérieure.

Typiquement les échanges thermiques par conduction et convection sont très fortement réduits comparativement aux échanges thermiques qui se produiraient avec une cuve ayant une paroi fine en plastique

Selon le mode de réalisation ici détaillé, la résistance thermique des parois de la cuve et de l'enceinte du mode de réalisation ici décrit à titre d'exemple peut être de l'ordre de 3 K.W⁻¹

En comparaison, avec une cuve en plastique de 1mm à 2mm d'épaisseur comme celles couramment utilisée dans les dispositifs d'électrochloration de l'art antérieur, un dispositif de dimensions analogues aurait une résistance thermique comprise entre 0,009 K.W⁻¹ et 0,02 K.W⁻¹.

La résistance thermique du dispositif objet de l'invention peut donc être de 150 à 330 fois plus élevée que celle d'un dispositif comportant une cuve en plastique classique.

Les valeurs données ci-dessus sont purement indicatives, et on pourra par exemple considérer que le volume intérieur de la cuve est isolé thermiquement de l'atmosphère extérieure au dispositif dès lors que la résistance thermique entre le volume intérieur de la cuve et l'atmosphère extérieure est supérieure à 0,25 K.W⁻¹.

A cette fin la cuve 1 est placée, dans l'exemple ici représenté, dans une enceinte 6 isolante. L'enceinte 6 comporte une paroi extérieure 4 et une paroi intérieure 5. La paroi intérieure 5 définit un volume conformé pour recevoir la cuve 1. Notamment le volume définit par la paroi intérieur 5 de l'enceinte 6 peut correspondre, à un jeu fonctionnel près, à la forme extérieure de la cuve 1.

Pour plus de lisibilité, l'enceinte 6 et la cuve 1 sont représentées en transparence sur la figure 1.

La paroi intérieure 5 et la paroi extérieure 4 sont espacées entre elles. En particulier la distance entre lesdites paroi intérieure 5 et paroi extérieure 4 peut-être sensiblement égale en tous points desdites parois. Par exemple, la paroi extérieure 4, qui définit la forme extérieure d'une partie du dispositif, peut avoir une forme générale cylindrique, et la paroi intérieure 5 peut définir un volume de réception de la cuve 1 lui-même cylindrique, de plus petit diamètre et disposé de manière coaxiale vis-à-vis du cylindre définit par la paroi extérieure 4.

Un espace est ainsi défini entre la paroi intérieure 5 et la paroi extérieure 4. Cet espace forme une couche d'isolation 6.

La couche d'isolation ainsi formée peut-être simplement une couche d'air. Cette couche d'air peut-être à la pression atmosphérique, ou à pression réduite pour améliorer les caractéristiques d'isolation thermique. Le vide peut ainsi être fait entre la paroi intérieure 5 et la paroi extérieure 4 de la cuve. Par « vide » il est entendu de l'air à une pression réduite voir quasiment nulle. Alternativement, la couche isolante peut-être remplie en tout ou partie par un matériau isolant. Par exemple la couche d'isolation peut être rempli d'un gaz isolant (argon, krypton, xénon, etc.). La couche d'isolation peut être remplie d'un liquide isolant. La couche d'isolation peut être remplie d'un matériau plastique expansé telle que du polystyrène expansé du polypropylène expansé. D'autres matériaux isolants peuvent être employés avec succès pour remplir la couche d'isolation. Notamment des isolants naturels tels que du liège peuvent être utilisés. Des isolants fibreux peuvent être utilisés tels que les isolants à base de fibres naturelles par exemple de la laine ou du coton, ou à base de fibres de synthèse telles que la laine de verre ou la laine de roche.

Des matériaux isolants ayant une conductivité thermique faible, par exemple inférieure à 0,1 W m⁻¹ K⁻¹ sont avantageusement utilisés.

Dans un mode de réalisation alternatif, l'enceinte et la cuve peuvent former un seul élément. Dans ce cas, la paroi intérieure 4 de l'enceinte forme la cuve 1 et définit le volume intérieur 2.

Le dispositif comporte un électrolyseur 7 à l'intérieur de la cuve 1. L'électrolyseur 7 est un système comportant au moins deux électrodes auxquelles on impose une tension électrique de sorte à réaliser l'électrolyse d'une solution comportant du sel préalablement introduit dans la cuve. L'électrolyseur employé dans un mode de réalisation préférentiel de l'invention comporte quatre électrodes, et une tension électrique est imposée entre les deux électrodes les plus éloignées, de sorte que les deux électrodes intermédiaires ne sont pas alimentées directement. L'électrolyse de la solution salée contenue dans la cuve permet de produire du chlore actif dans ladite cuve.

La cuve est fermée dans sa partie supérieure par un couvercle 8. Le retrait du couvercle 8 permet le remplissage de la cuve avec la solution à électrolyser ainsi que, le cas échéant, la récupération de la solution chlorée obtenue après électrolyse. La cuve 1 peut être équipée d'un robinet en partie basse, permettant de vider la cuve.

Selon une autre particularité de l'invention le dispositif comporte un dispositif de régulation thermique. Le dispositif de régulation thermique permet de manière générale le contrôle et le pilotage de la température de la solution présente dans la cuve. Il comporte ainsi, dans l'exemple représenté, un dispositif thermodynamique 9, un capteur de température, et des moyens de régulation, par exemple un dispositif de commande électronique, pilotant le fonctionnement du dispositif thermodynamique 9 et, le cas échéant, de l'électrolyseur 7.

Le dispositif thermodynamique 9 permet en particulier de refroidir la solution présente dans la cuve 1. Le dispositif thermodynamique 9 permet donc l'extraction de calories depuis la solution présente dans la cuve vers l'atmosphère extérieure.

Le dispositif thermodynamique 9 constitue donc un refroidisseur, et, optionnellement, un réchauffeur. Différentes technologies de dispositif thermodynamique sont envisageables. L'emploi d'un module à effet Peltier (ou « module Peltier ») est préféré.

Un module Peltier, ou refroidisseur thermoélectrique, permet la génération de froid à partir d'un courant électrique. La partie froide du module Peltier est positionnée dans la cuve ou au contact d'une paroi conductrice de la cuve 1.

Le module Peltier (ou autre dispositif thermodynamique adapté, qu'on peut désigner par l'appellation « groupe froid ») est ainsi configuré et disposé de sorte à drainer une certaine puissance thermique depuis le volume intérieur de la cuve vers l'extérieur du dispositif. Cela permet une régulation thermique de la solution présente dans la cuve. En particulier, le refroidissement obtenu grâce au module Peltier permet de maintenir la solution présente dans la cuve à une température à laquelle une électrochloration ne provoque pas une génération importante de chlorate (typiquement en dessous de 40°C).

Le dispositif de régulation thermique comporte en outre un capteur de température 10 présent dans la cuve, et des moyens de régulation automatiques associés, qui permettent le pilotage de la régulation thermique de la solution présente dans la cuve.

Le pilotage du module Peltier, qu'il s'agisse de lui imposer une succession de mises en fonctionnement et d'arrêts, ou de le faire fonctionner à une puissance variable, permet de réguler la température de la solution présente dans la cuve 1 pour produire la solution de chlore le plus rapidement possible.

Le principe développé dans l'invention réside ainsi dans la combinaison contreintuitive, comparativement aux dispositifs connus dans l'état de la technique, d'une enceinte 6 isolante thermique qui empêche la dissipation naturelle de la chaleur de la solution présente dans la cuve 1 vers l'atmosphère extérieure (tandis que l'électrolyse tend à faire augmenter cette température) et d'un dispositif de régulation thermique comportant un dispositif thermodynamique permettant d'extraire de la chaleur de la solution présente dans la cuve (de préférence un module Peltier), dont le pilotage permet une régulation de la température de la solution électrolysée.

Le dispositif comporte par ailleurs un dissipateur thermique. Le dissipateur thermique 11 est configuré pour dissiper dans l'atmosphère extérieure au dispositif les calories drainées depuis l'intérieur de la cuve 1. Le dissipateur thermique 11 peut être disposé sous la cuve 1 à proximité voire au contact du dispositif thermodynamique 9.

Le dissipateur thermique 11 est avantageusement du type ventirad. Un « ventirad » qui est la contraction des mots ventilateur et radiateur désigne un dissipateur thermique qui comporte ces deux éléments. Les ventirads sont des dispositifs couramment employés pour la dissipation thermique dans les systèmes électroniques tels que les ordinateurs. Les ventirads sont des dissipateurs thermiques qui présentent de nombreux avantages. Ce sont des dispositifs simples et fiables nécessitant une simple alimentation électrique pour le fonctionnement de leur ventilateur. Ils permettent une bonne dissipation thermique malgré leur grande compacité.

D'autres types de dissipateurs thermiques peuvent bien évidemment être employés avec succès, à commencer par des radiateurs, dès lors qu'ils sont correctement dimensionnés pour dissiper les calories issues de la solution présente dans la cuve 1. Des systèmes à refroidissement liquide peuvent également être employés.

Selon d'autres aspects optionnels de l'invention, le mode de réalisation représenté à la figure 1 comporte des pieds 12, ici au nombre de trois permettant un appui isostatique du dispositif sur toute surface. Les pieds 12 peuvent être repliables ou démontables.

Le dispositif objet de l'invention est préférentiellement compact pour être facilement transportable.

Le mode de réalisation de la figure 1 comporte une cuve de 5L environ. Le dispositif représenté à la figure 1 mesure 60cm de hauteur, pieds 12 compris. L'enceinte et la cuve ont une hauteur de l'ordre de 30cm. Le diamètre hors tout de la cuve et de l'enceinte est également de l'ordre de 30cm.

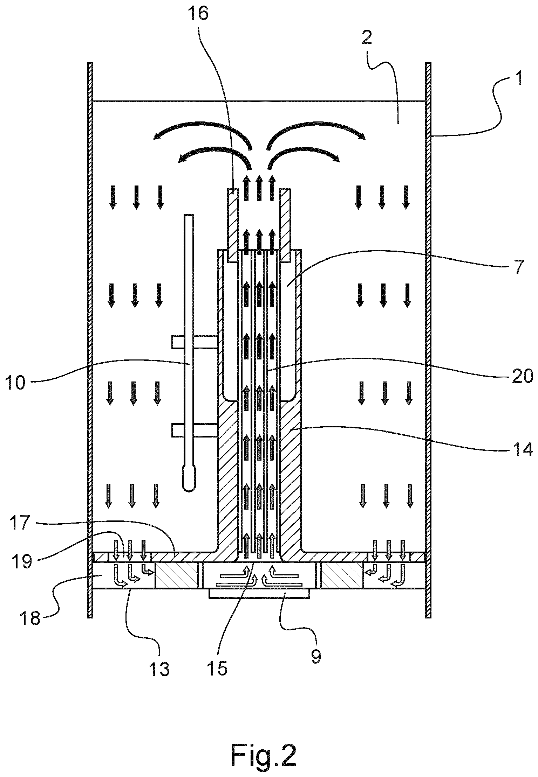

La figure 2 représente de manière schématique la cuve du dispositif d'électrochloration de la figure 1.

Dans l'exemple présenté à la figure 2 la cuve 1 est remplie d'une solution contenant du sel. La solution utilisée est de l'eau salée, c'est-à-dire de l'eau contenant du chlorure de sodium.

Seule la cuve 1 est représentée à la figure 2. En particulier l'enceinte 6 isolante n'est pas représentée, bien qu'elle soit nécessaire au bon fonctionnement du dispositif. Le dispositif thermodynamique 9, à savoir un module Peltier, est disposé contre une paroi de fond 13 de la cuve 1, la paroi de fond 13 étant conductrice thermique.

La paroi de fond 13 est néanmoins isolée thermiquement de l'atmosphère extérieure au dispositif dans les zones où elle n'est pas en contact avec le module Peltier (ou autre dispositif thermodynamique refroidisseur, et optionnellement réchauffeur). Par ailleurs, la paroi de fond 13 est résistante aux ions chlorure et à l'hypochlorite, soit par nature (par exemple parce qu'elle est constituée d'un matériau plastique adapté, ou de verre), soit grâce à un revêtement protecteur recouvrant sa face interne à la cuve.

L'électrolyseur 7 est quant à lui ménagé en partie haute d'une colonne d'électrolyse 14. La colonne d'électrolyse 14 comporte une face ouverte inférieure 15 située en regard du dispositif thermodynamique 9 et une face ouverte supérieure 16. La colonne d'électrolyse 14 est avantageusement fixée à l'intérieur de la cuve de sorte que sa face ouverte inférieure 15 soit située à distance de la paroi de fond 13. Une paroi horizontale 17, qui peut être monobloc de la colonne d'électrolyse 14, et ainsi être ménagée à distance de la paroi de fond 13. La paroi horizontale 17 définit une chambre inférieure 18 de la cuve. La paroi horizontale comporte néanmoins des ouvertures 19 permettant un libre passage de la solution vers ladite chambre inférieure 18 de la cuve 1.

Le dispositif thermodynamique 9 permet ainsi de refroidir la solution présente dans le fond de la cuve 1. L'émulsion générée par la production de dihydrogène au niveau des électrodes de l'électrolyseur 7 produit un phénomène de convection, ce qui accélère la remontée de la solution dans la colonne. La colonne d'électrolyse 14 comporte en outre un ensemble de plaques verticales 20 formant des électrodes intermédiaires qui participent à l'électrolyse. Bien qu'elles ne soient pas directement alimentées électriquement, elles se situent dans le champ électrique créé par la différence de potentiel imposée entre les plaques extérieures (électrodes soumises à une tension électrique), et se comportent comme des diviseurs de tension. Corolairement, elles favorisent le flux ascendant dans la colonne d'électrolyse 14.

Le dispositif peut en outre présenter des restrictions de section traversées par le flux créé dans la cuve. Ces restrictions de section, formées par exemple à proximité du fond de la cuve 1, par exemple dans le support de la colonne d'électrolyse 14, génèrent un effet venturi qui accélère le flux ascendant dans la colonne d'électrolyse 14.

L'ensemble de ces mesures favorisant le flux dans la colonne d'électrolyse 14 génère une circulation de la solution dans la cuve 1 qui en favorise le brassage. Aucun moyen mécanique supplémentaire n'est ainsi nécessaire. Ce brassage permet d'homogénéiser la solution, en particulier en ce qui concerne sa composition, en particulier sa teneur en sels et corolairement en chlore actif.

Enfin, le capteur de température 10 est positionné dans la cuve 1 de sorte à fournir une indication représentative de la température de la solution. Le capteur de température peut être accroché à la colonne d'électrolyse 14, comme dans l'exemple ici représenté.

Le dispositif d'électrochloration doit être alimenté électriquement pour l'électrolyse, la régulation thermique, et le contrôle de ses paramètres de fonctionnement.

Le dispositif d'électrochloration comporte ainsi une alimentation électrique (non représentée sur les figures) qui comporte au moins l'un des éléments suivants :
- un ensemble de panneaux photovoltaïques,
- une batterie (par exemple une batterie automobile au plomb 12V),
- une alimentation, par exemple à découpage, adaptée à un branchement sur un réseau de distribution électrique ou à un groupe électrogène.

Avantageusement, le dispositif d'électrochloration est configuré pour fonctionner indifféremment avec l'une des alimentations électriques précitées.

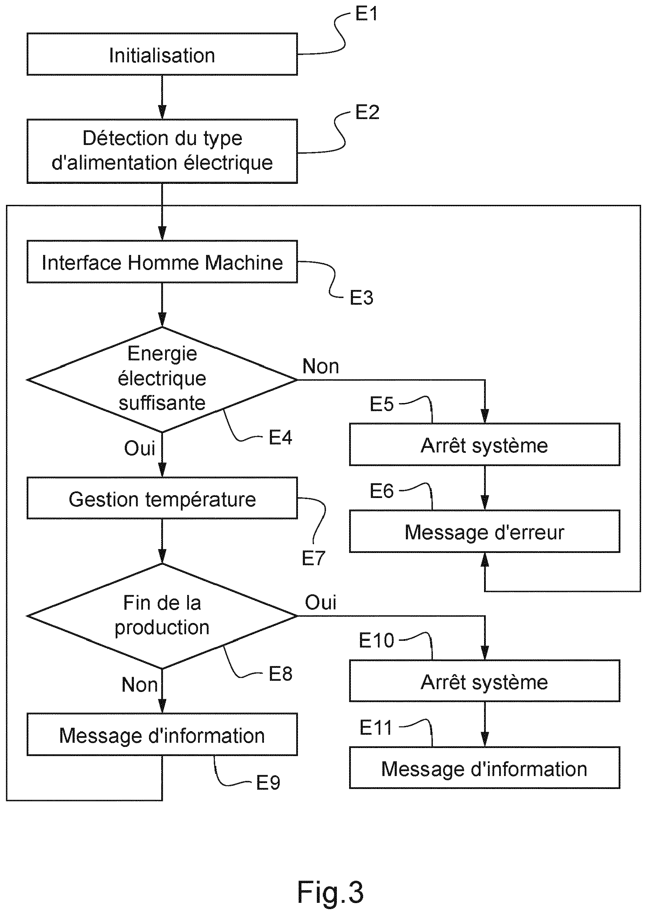

La figure 3 représente sur un logigramme un exemple de procédé de commande du dispositif d'électrochloration.

Une première étape est l'initialisation électronique (E1) du dispositif. Elle peut être réalisée, de manière automatique, dès le branchement du dispositif. S'en suit la détection automatique du type d'alimentation(s) électrique(s) reliées au dispositif (E2). L'allumage du dispositif est signalé par une information au niveau d'une interface homme-machine (E3).

L'interface homme-machine désigne l'ensemble des moyens permettant au dispositif d'avertir un utilisateur de son état et à l'utilisateur d'interagir avec la machine. Dans le cas présent, une interface homme-machine très simple et robuste est recherchée. Pour ce qui est d'indiquer l'état de la machine, un ensemble de diodes électroluminescentes formant un afficheur lumineux peut être utilisé (la couleur des diodes pouvant indiquer l'état du dispositif). Alternativement ou en complément, un écran, de préférence à très faible consommation électrique (par exemple à cristaux liquides) peut être utilisé. Pour ce qui est de permettre l'interaction avec le dispositif, un dispositif simple est privilégié. Il peut s'agir d'une fonction tactile de l'écran, si le dispositif en est équipé. Plus simplement, un ou plusieurs boutons peuvent être employés. Tout type de bouton adapté (poussoir, à bascule, tactile, etc.) peut être employé. En particulier, un seul bouton peut se révéler suffisant pour commander les fonctions principales du dispositif. Ces fonctions comportent typiquement l'allumage (mise en production) du dispositif, et sa réinitialisation. Elles peuvent comporter également la sélection d'un mode de fonctionnement, et/ou la commande d'un arrêt du dispositif.

Lorsqu'un écran est utilisé, l'interface peut être proposée en plusieurs langues.

Une fois que l'allumage du dispositif est commandé grâce à l'interface homme-machine, le dispositif détecte automatiquement le type d'alimentation connectée.

Le dispositif évalue si l'alimentation électrique est suffisante (E4) pour alimenter l'électrolyseur et permettre l'électrolyse de la solution présente dans la cuve et pour alimenter des autres consommateurs électriques du dispositif (notamment si la source d'énergie détectée est un ensemble de panneaux photovoltaïque ou une batterie).

En outre, si l'énergie est fournie par des panneaux photovoltaïques, le dispositif peut comporter une assistance au positionnement des panneaux photovoltaïques, en particulier de leur inclinaison, pour obtenir la meilleure alimentation électrique possible.

Cette assistance consiste à fournir à un utilisateur qui installe l'ensemble de panneaux photovoltaïque une information permettant d'optimiser leur positionnement angulaire Ce contrôle est avantageusement poursuivi tout au long du fonctionnement du dispositif.

Si l'énergie électrique (par exemple évaluée par la tension en entrée du dispositif) est insuffisante, le dispositif est arrêté (E5) et l'utilisateur en est averti par un message d'erreur (E6). Selon l'interface homme-machine employée, le message d'erreur peut être un message textuel, l'allumage d'une diode électroluminescente d'une couleur donnée, l'extinction d'une diode électroluminescente, ou un signal sonore.

Le dispositif peut en outre avantageusement comporter une réserve d'énergie permettant une alimentation temporaire du dispositif électronique de commande du système en cas de coupure de l'alimentation électrique. Cette alimentation temporaire permet au dispositif de commande d'être averti de son arrêt prochain par défaut d'alimentation électrique, et permet dans ce cas la sauvegarde de données relatives à l'électrochloration en cours. La réserve d'énergie peut être fournie, par exemple, par un ou plusieurs condensateurs.

Si l'énergie électrique est suffisante, le procédé d'électrochloration par électrolyse de la solution présente dans la cuve du dispositif commence. Pendant tout le procédé, une gestion de la température (E7) est effectuée. Il s'agit de piloter la température de la solution dans la cuve pendant l'électrolyse. En particulier, la température doit être suffisante pour permettre une électrolyse efficace de la solution, tout en restant sous un seuil de température au-delà duquel des chlorates sont formés en quantité significative (au-delà de 40°C). L'élévation de température dans la cuve est contrée à l'aide du groupe froid du dispositif. Bien évidemment, si la température s'élève de manière trop importante, l'électrolyse peut être ralentie ou stoppée tout en continuant à alimenter le groupe froid du dispositif, afin de stabiliser voire de faire retomber la température dans la cuve.

L'interface homme-machine peut avantageusement permettre l'affichage en temps réel de la production de chlore actif (par exemple sur l'écran, si l'interface homme-machine comporte un tel écran).

La gestion en température (E7) est ainsi poursuivie jusqu'à la fin de la production (E8) de chlore actif, c'est-à-dire jusqu'à l'électrolyse complète, ou d'un niveau jugé suffisant (typiquement lorsque la solution atteint une concentration de 5g/L de chlore actif). Bien évidemment, le système peut néanmoins s'arrêter à tout moment en cas d'insuffisance de l'alimentation électrique.

Avant la fin de la production, l'utilisateur peut être averti que la production est en cours par un message d'information (E9) sous la forme d'un message textuel, de l'allumage d'une diode électroluminescente, etc, ou, le cas échéant, d'un message d'erreur (E6). Lorsque la fin de la production est constatée, le système s'arrête (E10) et l'utilisateur en est averti (E11) par un message d'information correspondant (message textuel, l'allumage d'une diode électroluminescente, et/ou signal sonore, etc.)

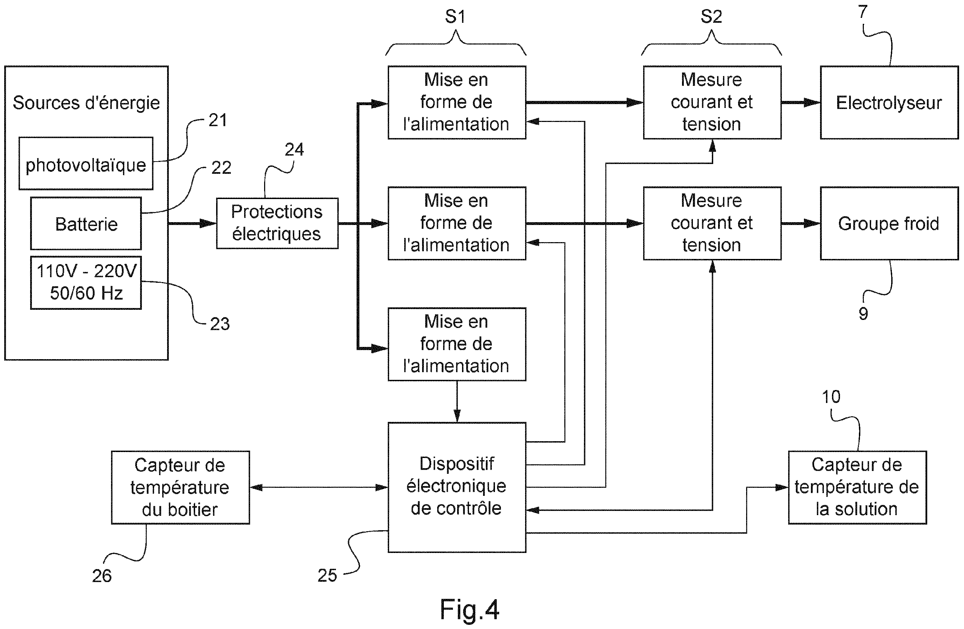

La figure 4 représente, selon un schéma bloc de principe, le contrôle des systèmes électriques pouvant être mis en œuvre dans un mode de réalisation de l'invention.

La figure 4 illustre en particulier un mode de réalisation dans lequel le dispositif peut être alimenté électriquement par l'une quelconque des sources suivantes : un ensemble de panneaux photovoltaïques 21, une batterie 22 (par exemple une batterie au plomb de type 12v, ou une batterie de toute autre technologie), ou un réseau de distribution électrique 23 (généralement 110v ou 220v alternatif, à 50Hz ou 60Hz).

Le dispositif comporte un certain nombre de protections électriques 24, par exemple des fusibles et/ou des disjoncteurs, disposés sur les circuits électriques concernés. Selon le type de courant disponible en entrée du dispositif, notamment selon sa tension et son caractère alternatif ou continu, une mise en forme de l'alimentation électrique adaptée est réalisée. Plus particulièrement, dans l'exemple ici représenté, une mise en forme distincte est réalisée (S1) pour former des courants respectivement adaptés à l'alimentation de l'électrolyseur 7, du dispositif thermodynamique 9, et du dispositif électronique de contrôle 25.

Des mesures de courant et de tension sont réalisées, par le dispositif électronique de commande 25, au moins pour ce qui concerne les courants d'alimentation de l'électrolyseur 7 et du dispositif thermodynamique 9, afin de s'assurer notamment que l'énergie fournie par l'alimentation électrique est suffisante. Plus généralement, selon ces mesures, le dispositif électronique de commande 25 pilote les courants électriques qui alimentent respectivement l'électrolyseur 7 et le dispositif thermodynamique 9. Ce pilotage se fonde sur des mesures de températures fournies au dispositif de commande par le capteur de température 10, qui fournit une information sur la température de la solution, et, optionnellement, par un capteur de température du boîtier 26, qui fournit une information sur la température du boîtier électronique du dispositif contenant le dispositif électronique de contrôle, afin de le protéger de toute surchauffe, notamment en cas de très forte température ambiante.

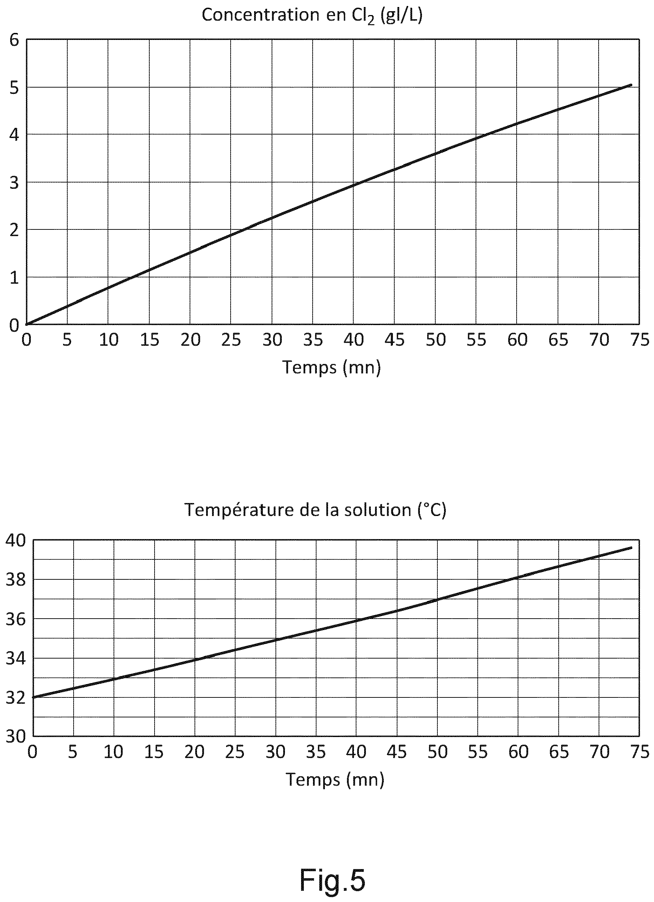

La figure 5 représente, par deux graphiques temporels, un exemple de résultat obtenu avec un dispositif conforme à un mode de réalisation de l'invention. L'exemple de la figure 5 concerne le cas où la température ambiante est très élevée, à savoir 50°C, et la température initiale de l'eau de la solution est également élevée, à savoir 32°C. Cela correspond à des conditions extrêmes pouvant être trouvées par exemple en Afrique ou en Amérique du sud.

Le dispositif objet de l'invention a permis dans ces conditions l'obtention d'une solution à 5g/L de Cl₂ en 74 minutes. A titre de comparaison, un dispositif d'électrochloration de l'état de la technique ne pourrait tout simplement pas fonctionner dans ces conditions sans produire trop de chlorates, car la température de la solution monterait rapidement au-dessus de 40°C.

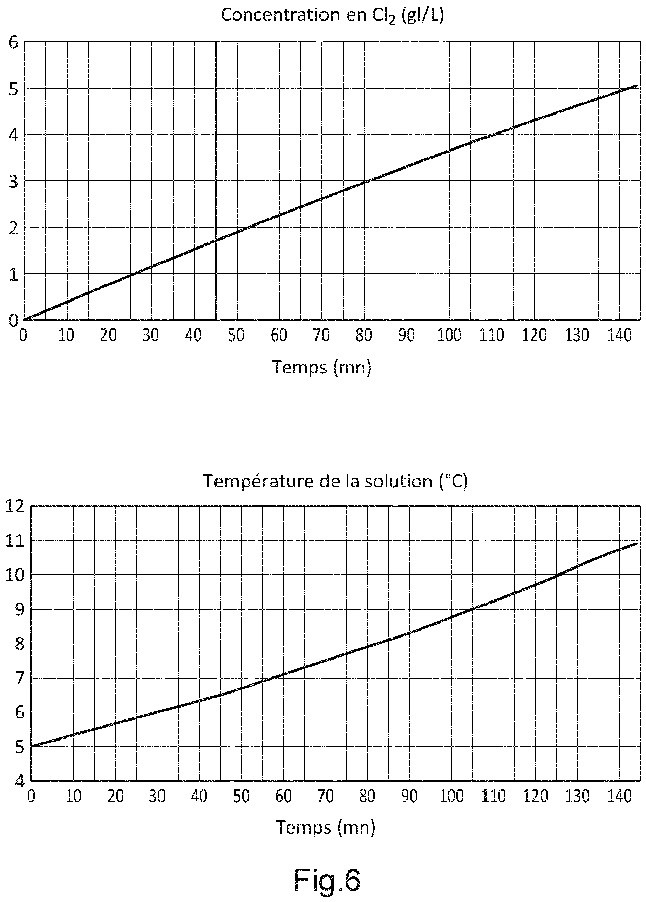

La figure 6 représente, par deux graphiques temporels, un autre exemple de résultat obtenu avec un dispositif conforme à un mode de réalisation de l'invention. L'exemple de la figure 6 concerne le cas où la température ambiante est très basse, à savoir 20°C, et la température initiale de l'eau de la solution est également basse, à savoir 5°C. Cela correspond à des conditions extrêmes pouvant être trouvées dans de nombreuses région de la Terre, notamment en périodes hivernales.

Le dispositif objet de l'invention a permis dans ces conditions l'obtention d'une solution à 5g/L de Cl₂ en 143 minutes. Dans ces conditions, le dispositif thermodynamique, s'il n'est pas réversible, n'est pas activé par le dispositif de contrôle, mais la chaleur produite par l'électrolyse et l'isolation thermique de la cuve permette une élévation de la température de la solution qui favorise l'électrochloration. A titre de comparaison, un dispositif d'électrochloration de l'état de la technique ne pourrait tout simplement pas fonctionner dans ces conditions, car les échanges thermiques avec l'atmosphère ambiante feraient chuter la température de la solution ou la maintiendrait à une température ne permettant pas l'électrochloration.

Le dispositif objet de la présente invention peut être en particulier conçu de manière à être facilement transportable. Il peut notamment être configuré pour se ranger dans deux valises. Une première valise permet le transport de la cuve isolée thermiquement, de l'électrolyseur, du boitier de contrôle, des câblages, du matériel de protection pour l'opérateur, de sel, du matériel de dosage et du matériel nécessaire au titrage de l'hypochlorite de sodium. Une deuxième valise contient les panneaux photovoltaïques configurés pour l'alimentation du dispositif, et leur support. D'autres répartitions sont bien entendu possibles. Ces deux valises permettent un transport aisé du dispositif sur de courtes distances pour sa mise en œuvre, et assurent également une protection contre les chocs et les aléas d'un transport ou d'un envoi sur de plus longues distances, en voiture, en avion, ou tout autre moyen de transport.

Bien que la présente invention a été décrite ci-avant pour l'électrochloration par électrolyse d'une solution contenant du chlorure de sodium, il n'est pas exclu de l'invention d'employer une solution contenant tout type de chlorures, notamment du chlorure de calcium, de magnésium, ou de potassium

L'invention ainsi développée permet, par la combinaison d'une cuve isolée thermiquement de l'atmosphère ambiante et d'un dispositif de régulation thermique, un pilotage de la température de la solution électrolysée. Il est ainsi possible de faire atteindre à la solution une température compatible d'une l'électrochloration efficace et de l'y maintenir, ce qui réduit le temps nécessaire à la réaction. Le dispositif est ainsi compatible d'un fonctionnement dans des conditions climatiques extrêmes, très chaudes ou très froides.

La présente invention offre ainsi une solution de potabilisation d'eau adaptée à être mise en œuvre dans des conditions variées et complexes, dans lesquelles les dispositifs connus sont inefficaces, mal adaptés, voire dangereux pour la santé des utilisateurs finaux.

## Revendications

1. Dispositif de production de chlore par électrochloration d'une solution contenant des chlorures, le dispositif comportant :
- une cuve (1) formant un volume intérieur (2) destiné à recevoir ladite solution et un électrolyseur (7) installé dans la cuve (1),
- une enceinte (6) dans laquelle est disposée ou formée la cuve (1), ladite enceinte (6) étant configurée de sorte à isoler thermiquement le volume intérieur (2) de la cuve (1) vis-à-vis de l'atmosphère ambiante (3) extérieure au dispositif,
- un dispositif de régulation thermique comportant un dispositif thermodynamique (9) adapté à refroidir la solution présente dans la cuve (1),
**caractérisé en ce que** le dispositif thermodynamique (9) comporte un module Peltier et est installé au niveau d'un fond de la cuve (1).

2. Dispositif selon la revendication 1, dans lequel la cuve (1) comporte une colonne d'électrolyse (14) comportant l'électrolyseur (7), ladite colonne d'électrolyse (14) étant installée dans le volume intérieur (2) et étant orientée de sorte à s'étendre sensiblement verticalement lorsque le dispositif est utilisé, la cuve (1) étant configurée de sorte qu'une solution présente dans la cuve peut s'écouler dans ladite colonne d'électrolyse (14) d'une extrémité à une autre de ladite colonne d'électrolyse (14).

3. Dispositif selon la revendication 2, dans lequel le dispositif comporte une restriction de section adaptée à accélérer un flux de solution s'écoulant du bas de la colonne d'électrolyse vers le haut de celle-ci et à générer un effet Venturi dans ledit flux.

4. Dispositif selon l'une des revendications précédentes, comportant en outre un dissipateur thermique (11), préférentiellement de type ventirad, qui est configuré pour dissiper de la chaleur extraite de la solution par le dispositif thermodynamique (9).

5. Dispositif selon l'une des revendications précédentes, dans lequel l'enceinte (6) comporte une paroi extérieure (4), et une paroi intérieure (5), ladite paroi intérieure (5) formant un volume adapté à recevoir la cuve ou formant ladite cuve, la paroi intérieure (5) et la paroi extérieure (4) étant espacées l'une de l'autre de sorte à former une couche d'isolation entre elles.

6. Dispositif selon la revendication 5, dans lequel la couche d'isolation comporte au moins l'un des éléments isolants thermiques suivants :
- de l'air, à pression atmosphérique ou réduite,
- un gaz isolant thermique,
- un matériau plastique expansé, tel que du polystyrène expansé,
- un isolant fibreux, par exemple de la laine, de la laine de verre ou de la laine de roche.

7. Dispositif selon l'une des revendications précédentes, dans lequel ledit dispositif comporte une alimentation électrique d'au moins l'un des types suivants :
- un ensemble de panneaux photovoltaïques (21),
- une batterie, (22)
- une alimentation adaptée à être branchée à un réseau de distribution électrique (23) ou un groupe électrogène.

8. Dispositif selon la revendication 7, comportant des moyens électroniques adaptés à détecter automatiquement le type d'alimentation électrique.

9. Dispositif selon la revendication 7 ou la revendication 8, dans lequel l'alimentation électrique comporte un ensemble de panneaux photovoltaïques (21), et dans lequel le dispositif comporte un système d'assistance au positionnement desdits panneaux photovoltaïques pour maximiser l'énergie électrique produite.

10. Dispositif selon l'une des revendications précédentes, comportant en outre un dispositif électronique de contrôle (25), ledit dispositif étant adapté à piloter le fonctionnement de l'électrolyseur (7) et du dispositif thermodynamique (9) en fonction d'au moins un paramètre, afin de limiter le temps de production du chlore tout en limitant ou en empêchant la production de chlorates.

11. Dispositif selon la revendication 10 dans lequel l'au moins un paramètre comporte un ou plusieurs des paramètres suivants :
- la température courante de la solution, mesurée en un point de la cuve ;
- la concentration courante de la solution en sel ;
- la concentration courante de la solution en chlore actif ; et
- la tension électrique disponible au niveau de l'alimentation électrique.

12. Dispositif selon la revendication 9 ou la revendication 11, dans lequel le dispositif électronique de contrôle (25) est configuré pour faire atteindre à la solution une température optimale pour l'électrochloration puis tendre à maintenir la température de la solution à un niveau acceptable pour l'électrochloration.

13. Dispositif selon l'une des revendications précédentes, dans lequel le volume intérieur (2) de la cuve (1) est compris entre 1L et 10L, par exemple de l'ordre de5L.

14. Dispositif selon l'une des revendications précédentes, comportant une interface homme-machine comportant un indicateur d'état, tel qu'une ou plusieurs diodes électroluminescentes ou un écran, et un ou plusieurs boutons de commande, et préférentiellement un unique bouton de commande.
